# EUROPEAN PATENT APPLICATION

(11) **EP 4 568 391 A1**
(43) Date of publication of application: **11.06.2025**
(21) Application number: 23849356.3
(22) Date of filing: 31.07.2023
(51) Int. Cl.: H04W 72/0453

(54) **FREQUENCY DOMAIN RESOURCE DETERMINATION METHOD AND APPARATUS, FREQUENCY DOMAIN RESOURCE INDICATION METHOD AND APPARATUS, TERMINAL, AND NETWORK DEVICE**

(30) Priority: 02.08.2022 CN 202210922922
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN)
(74) Representative: Studio Torta S.p.A.
(86) International application number: PCT/CN2023/110242
(87) International publication number: WO 2024/027649

(57) **Abstract**

A frequency domain resource determination method, an indication method, an apparatus, a terminal and a network device are provided. The method includes: receiving first indication information, where the first indication information is configured to indicate first frequency domain offset information between an uplink sub-band and a first bandwidth part (BWP); and determining a frequency domain resource of a target PUSCH according to the first frequency domain offset information, thereby enabling the PUSCH to be scheduled at any uplink sub-band position.

## Description

### CROSS REFERENCE OF RELATED APPLICATION

The present disclosure claims a priority of Chinese patent disclosure No. 202210922922.2 filed on August 2, 2022, application "Frequency domain resource determination method, indication method, device, terminal and network equipment" which is incorporated herein by reference in its entirety.

### TECHNICAL FIELD

The present disclosure relates to the field of communication technology, and in particular to a frequency domain resource determination method, indication method, an apparatus, a terminal and a network device.

### BACKGROUND

In the R18 version of the fifth generation mobile communication technology (5G) new radio (NR), full-duplex with non-overlapping sub-bands will be supported, that is, the base station can simultaneously transmit and receive through different sub-bands in a time division duplex (TDD) band/carrier/bandwidth part (BWP), and the sub-bands used for transmission and reception do not overlap.

### SUMMARY

The present disclosure is to provide a frequency domain resource determination method, indication method, an apparatus, a terminal and network device to solve the problem that uplink sub-band resources cannot be addressed in specific scenarios in sub-band full-duplex technology in related technologies.

In order to solve the above problem, an embodiment of the present disclosure provides a method for determining frequency domain resource, which is performed by a terminal. The method includes:
receiving first indication information, where the first indication information is configured to indicate first frequency domain offset information between an uplink sub-band and a first bandwidth part (BWP);
determining a frequency domain resource of a target PUSCH according to the first frequency domain offset information.

Optionally, the determining the frequency domain resource of the target PUSCH according to the first frequency domain offset information includes:
determining the frequency domain resource of the target PUSCH according to the first frequency domain offset information and frequency domain resource allocation (FDRA) information;
where a quantity of virtual resource block (VRB) addressed by the FDRA information is: a quantity of RBs included in an initial BWP, or a quantity of RBs included in an uplink sub-band.

Optionally, the first BWP is an activation BWP;
the determining, according to the first frequency domain offset information and the FDRA information, the frequency domain resource of the target PUSCH, includes:
according to a number of the VRB addressed by the FDRA information and the first frequency domain offset information, mapping the VRB to a physical resource block (PRB) to obtain a frequency domain resource of the target PUSCH.

Optionally, the first BWP is an initial BWP;
the determining, according to the first frequency domain offset information and the FDRA information, the frequency domain resource of the target PUSCH, includes:
according to the number of the VRB addressed by the FDRA information, the first frequency domain offset information, and the second frequency domain offset information between the initial BWP and the activated BWP, mapping the VRB to a PRB to obtain the frequency domain resource of the target PUSCH.

Optionally, the first BWP is an initial BWP, and the activated BWP is the same as the uplink sub-band;
the determining the frequency domain resource of the target PUSCH according to the first frequency domain offset information and the frequency domain resource allocation (FDRA) information includes:
according to the number of the VRB addressed by the FDRA information and the first frequency domain offset information, mapping the VRB to a PRB to obtain the frequency domain resource of the target PUSCH.

Optionally, the method further includes:
according to relevant parameters of a scheduled target PUSCH, determining a frequency domain resource of the target PUSCH according to the first frequency domain offset information.

Optionally, the determining, according to relevant parameters of the scheduled target PUSCH, the frequency domain resource of the target PUSCH according to the first frequency domain offset information includes:
if the scheduled target PUSCH is within a time domain range corresponding to the uplink sub-band, determining the frequency domain resource of the target PUSCH according to the first frequency domain offset information;
   or,
if the scheduled target PUSCH is configured in a cell-level downlink symbol or a flexible symbol, determining the frequency domain resource of the target PUSCH according to the first frequency domain offset information;
   or,
according to the physical random access channel (PRACH) resource corresponding to the target PUSCH, determining the frequency domain resource of the target PUSCH according to the first frequency domain offset information; where there exists a mapping relationship the PRACH resource and the resource determination method of the target PUSCH.

Optionally, the method further includes:
receiving second indication information sent by a network device; where the second indication information is for the terminal to determine the frequency domain resource of the target PUSCH according to the first frequency domain offset information;
according to the second indication information, determining the frequency domain resource of the target PUSCH according to the first frequency domain offset information.

Optionally, the first indication information is further configured to instruct the terminal to determine the frequency domain resource of the target PUSCH according to the first frequency domain offset information.

Optionally, the method further includes:
if the terminal receives the first indication information, determining the frequency domain resource of the target PUSCH according to the first frequency domain offset information;
   or,
if the terminal receives the first indication information and the scheduled target PUSCH is configured in a cell-level downlink symbol or a flexible symbol, determining the frequency domain resource of the target PUSCH according to the first frequency domain offset information.

A frequency domain resource indication method is further provided in the embodiment of the present disclosure, performed by a network device, including:
determining frequency domain resource for terminal to transmit a target physical uplink shared channel (PUSCH);
determining first indication information according to the frequency domain resource of the target PUSCH; where the first indication information is configured to indicate first frequency domain offset information between an uplink sub-band and a first bandwidth part (BWP); and
sending the first indication information to the terminal.

Optionally, the method further includes:
sending frequency domain resource allocation (FDRA) information to the terminal; where a quantity of virtual resource block (VRB) addressed by the FDRA information is: a quantity of RBs included in an initial BWP, or a quantity of RBs included in an uplink sub-band;
the FDRA information and the first indication information are used by the terminal to determine the frequency domain resource of the target PUSCH.

Optionally, a physical resource block (PRB) corresponding to the frequency domain resource of the target PUSCH is determined by information of the VRB and the first frequency domain offset information;
where the first BWP is an activated BWP.

Optionally, the PRB corresponding to the frequency domain resource of the target PUSCH is determined by the VRB information, the first frequency domain offset information, and the second frequency domain offset information between the initial BWP and the activated BWP;
where the first BWP is an initial BWP.

Optionally, the PRB corresponding to the frequency domain resource of the target PUSCH is determined by the information of the VRB and the first frequency domain offset information;
where the first BWP is an initial BWP, and the activated BWP is the same as the uplink sub-band.

Optionally, the method further includes:
according to a predefined first rule, determining that the frequency domain resource of the target PUSCH is indicated by the first frequency domain offset information; where the first rule includes at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

Optionally, the method further includes:
by sending the first indication information, indirectly instructing the terminal to determine the frequency domain resource of the target PUSCH according to the first frequency domain offset information;
   or,
by sending the first indication information and the configured target PUSCH in a downlink symbol or a flexible symbol at the cell level, the terminal is indirectly instructed to determine the frequency domain resource of the target PUSCH according to the first frequency domain offset information.

Optionally, the method further includes:
sending second indication information to the terminal, where the second indication information is configured to instruct the terminal to determine the frequency domain resource of the target PUSCH according to the first frequency domain offset information.

Optionally, the first indication information is further configured to instruct the terminal to determine the frequency domain resource of the target PUSCH according to the first frequency domain offset information.

A terminal is further provided in the embodiment of the present disclosure, including a memory, a transceiver, and a processor:
the memory is configured to store a computer program; the transceiver is configured to send and receive data under a control of the processor; and the processor is configured to read the computer program in the memory to perform:
receiving first indication information, where the first indication information is configured to indicate first frequency domain offset information between an uplink sub-band and a first bandwidth part (BWP);
determining a frequency domain resource of a target PUSCH according to the first frequency domain offset information.

Optionally, the processor is further configured to read the computer program in the memory to perform:
determining the frequency domain resource of the target PUSCH according to the first frequency domain offset information and frequency domain resource allocation (FDRA) information;
where a quantity of virtual resource block (VRB) addressed by the FDRA information is: a quantity of RBs included in an initial BWP, or a quantity of RBs included in an uplink sub-band.

Optionally, the first BWP is an activation BWP;
the processor is configured to read the computer program in the memory to perform:
according to a number of the VRB addressed by the FDRA information and the first frequency domain offset information, mapping the VRB to a physical resource block (PRB) to obtain a frequency domain resource of the target PUSCH.

Optionally, the first BWP is an initial BWP;
the processor is configured to read the computer program in the memory to perform:
according to the number of the VRB addressed by the FDRA information, the first frequency domain offset information, and the second frequency domain offset information between the initial BWP and the activated BWP, mapping the VRB to a PRB to obtain the frequency domain resource of the target PUSCH.

Optionally, the first BWP is an initial BWP, and the activated BWP is the same as the uplink sub-band;
the processor is configured to read the computer program in the memory to perform:
according to the number of the VRB addressed by the FDRA information and the first frequency domain offset information, mapping the VRB to a PRB to obtain the frequency domain resource of the target PUSCH.

Optionally, the processor is further configured to read a computer program in the memory to perform:
according to relevant parameters of a scheduled target PUSCH, determining a frequency domain resource of the target PUSCH according to the first frequency domain offset information.

Optionally, the processor is further configured to read the computer program in the memory to perform:
if the scheduled target PUSCH is within a time domain range corresponding to the uplink sub-band, determining the frequency domain resource of the target PUSCH according to the first frequency domain offset information;
   or,
if the scheduled target PUSCH is configured in a cell-level downlink symbol or a flexible symbol, determining the frequency domain resource of the target PUSCH according to the first frequency domain offset information;
   or,
according to the physical random access channel (PRACH) resource corresponding to the target PUSCH, determining the frequency domain resource of the target PUSCH according to the first frequency domain offset information; where there exists a mapping relationship the PRACH resource and the resource determination method of the target PUSCH.

Optionally, the processor is further configured to read a computer program in the memory to perform:
receiving second indication information sent by a network device; where the second indication information is for the terminal to determine the frequency domain resource of the target PUSCH according to the first frequency domain offset information;
according to the second indication information, determining the frequency domain resource of the target PUSCH according to the first frequency domain offset information.

Optionally, the first indication information is further configured to instruct the terminal to determine the frequency domain resource of the target PUSCH according to the first frequency domain offset information.

Optionally, the processor is further configured to read a computer program in the memory to perform:
if the terminal receives the first indication information, determining the frequency domain resource of the target PUSCH according to the first frequency domain offset information;
   or,
if the terminal receives the first indication information and the scheduled target PUSCH is configured in a cell-level downlink symbol or a flexible symbol, determining the frequency domain resource of the target PUSCH according to the first frequency domain offset information.

A frequency domain resource determination apparatus is further provided in the embodiment of the present disclosure, including:
a receiving unit, configured to receive first indication information, where the first indication information is configured to indicate first frequency domain offset information between an uplink sub-band and a first bandwidth part (BWP);
a first determining unit, configured to determine a frequency domain resource of a target PUSCH according to the first frequency domain offset information.

A network device is further provided in the embodiment of the present disclosure, including a memory, a transceiver, and a processor:
the memory is configured to store a computer program; the transceiver is configured to send and receive data under a control of the processor; and the processor is configured to read the computer program in the memory to perform:
determining frequency domain resource for terminal to transmit a target physical uplink shared channel (PUSCH);
determining first indication information according to the frequency domain resource of the target PUSCH; where the first indication information is configured to indicate first frequency domain offset information between an uplink sub-band and a first bandwidth part (BWP); and
sending the first indication information to the terminal.

Optionally, the processor is further configured to read the computer program in the memory to perform:
sending frequency domain resource allocation (FDRA) information to the terminal; where a quantity of virtual resource block (VRB) addressed by the FDRA information is: a quantity of RBs included in an initial BWP, or a quantity of RBs included in an uplink sub-band;
the FDRA information and the first indication information are used by the terminal to determine the frequency domain resource of the target PUSCH.

Optionally, a physical resource block (PRB) corresponding to the frequency domain resource of the target PUSCH is determined by information of the VRB and the first frequency domain offset information;
where the first BWP is an activated BWP

Optionally, the PRB corresponding to the frequency domain resource of the target PUSCH is determined by the VRB information, the first frequency domain offset information, and the second frequency domain offset information between the initial BWP and the activated BWP;
where the first BWP is an initial BWP.

Optionally, the PRB corresponding to the frequency domain resource of the target PUSCH is determined by the information of the VRB and the first frequency domain offset information;
where the first BWP is an initial BWP, and the activated BWP is the same as the uplink sub-band.

Optionally, the processor is further configured to read a computer program in the memory to perform:
according to a predefined first rule, determining that the frequency domain resource of the target PUSCH is indicated by the first frequency domain offset information; where the first rule includes at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

Optionally, the processor is further configured to read a computer program in the memory to perform:
by sending the first indication information, indirectly instructing the terminal to determine the frequency domain resource of the target PUSCH according to the first frequency domain offset information;
   or,
by sending the first indication information and the configured target PUSCH in a downlink symbol or a flexible symbol at the cell level, the terminal is indirectly instructed to determine the frequency domain resource of the target PUSCH according to the first frequency domain offset information.

Optionally, the processor is further configured to read a computer program in the memory to perform:
sending second indication information to the terminal, where the second indication information is configured to instruct the terminal to determine the frequency domain resource of the target PUSCH according to the first frequency domain offset information.

Optionally, the first indication information is further configured to instruct the terminal to determine the frequency domain resource of the target PUSCH according to the first frequency domain offset information.

A frequency domain resource indication apparatus is further provided in the embodiment of the present disclosure, including:
a first determining unit, configured to determine frequency domain resource for terminal to transmit a target physical uplink shared channel (PUSCH);
a second determining unit, configured to determine first indication information according to the frequency domain resource of the target PUSCH; where the first indication information is configured to indicate first frequency domain offset information between an uplink sub-band and a first bandwidth part (BWP); and
a first sending unit, configured to send the first indication information to the terminal.

A processor-readable storage medium is further provided in the embodiment of the present disclosure, storing a computer program, where the computer program is configured to cause the processor to execute the method hereinabove.
the present disclosure has at least the following beneficial effects:
the present disclosure, the frequency domain offset between the uplink sub-band and the first BWP is indicated by the first indication information, thereby assisting the terminal in determining the frequency domain resource of the PUSCH scheduled by the RAR UL grant or the PUSCH scheduled by the DCI with TC-RNTI scrambling according to the first indication information, thereby enabling the PUSCH to be scheduled at any uplink sub-band position.

### BRIEF DESCRIPTION OF THE DRAWINGS

FIG. 1 shows one example of a method for determining frequency domain resource in the related art;
FIG.2 shows a second example of a method for determining frequency domain resource in the related art;
FIG.3 is a block diagram of a wireless communication system to which the embodiments of the present disclosure may be applied;
FIG.4 is a flowchart showing the steps of a method for determining frequency domain resource provided by an embodiment of the present disclosure;
FIG.5 shows a first example diagrams of the resource determination method provided by an embodiment of the present disclosure;
FIG.6 shows a second example diagram of the resource determination method provided by an embodiment of the present disclosure;
FIG. 7 shows a third example diagram of a resource determination method provided by an embodiment of the present disclosure;
FIG.8 shows a fourth example diagram of a resource determination method provided by an embodiment of the present disclosure;
FIG.9 shows a fifth example diagram of a resource determination method provided by an embodiment of the present disclosure;
FIG.10 shows a sixth example diagram of the resource determination method provided by an embodiment of the present disclosure;
FIG.11 is a seventh example diagram of a resource determination method provided by an embodiment of the present disclosure;
FIG.12 shows an eighth example diagram of the resource determination method provided by an embodiment of the present disclosure;
FIG.13 is a ninth example diagram of a resource determination method provided by an embodiment of the present disclosure;
FIG.14 is a tenth example diagram of a resource determination method provided by an embodiment of the present disclosure;
FIG.15 is a flowchart showing the steps of the frequency domain resource indication method provided by an embodiment of the present disclosure;
FIG.16 is a schematic diagram showing the structure of a terminal provided in an embodiment of the present disclosure;
FIG.17 is a schematic diagram showing the structure of a frequency domain resource determination apparatus provided in an embodiment of the present disclosure;
FIG.18 is a schematic diagram showing the structure of a network device provided in an embodiment of the present disclosure; and
FIG.19 is a schematic diagram showing the structure of a frequency domain resource indication apparatus provided in an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

For the Physical Uplink Shared Channel (PUSCH) scheduled by the uplink grant (UL grant) in the Random Access Response (RAR), or the PUSCH scheduled by the Downlink Control Information (DCI) format 0_0 scrambled by the Temporary Cell-Radio Network Temporary Identifier (TC-RNTI), there are two ways to determine the frequency domain resource of the PUSCH:

Case 1: For the initial BandWidth Part (initial BWP) and the active BWP are the same or the initial BWP is within the active BWP range and the subcarrier spacing (SCS) and cyclic prefix (CP) are the same, in this case, the virtual resource block index (VRB index) of the frequency domain resource allocation of PUSCH is based on the initial BWP indication (that is, VRB indicates the starting RB position and length within the initial BWP range), and an offset is added when mapping from VRB to physical resource block (PRB), which is the offset between the initial BWP starting resource block (RB) and the active BWP starting RB;

Case 2: For all cases except case 1, the frequency domain resource allocation of PUSCH is based on the starting RB position of the active BWP and is allocated according to the bandwidth of the initial BWP.

In order to solve the coverage, delay and capacity problems of uplink transmission in the time division duplex (TDD) mode, a research direction of non-overlapping sub-band full duplex is proposed, that is, the frequency domain resource are divided into multiple sub-bands that do not overlap with each other. The uplink frequency domain resource and the downlink frequency domain resource are located in different sub-bands, which can be referred to as sub-band full-duplex.

In the related art, uplink data is transmitted on the initial BWP (active BWP, i.e. initial BWP) or on the active BWP within the uplink symbol (UL symbol) or flexible symbol time range. For sub-band full-duplex technology, there will be dedicated UL sub-band resources for uplink transmission within the DL/flexible symbol time range. Accordingly, there are the following problems:

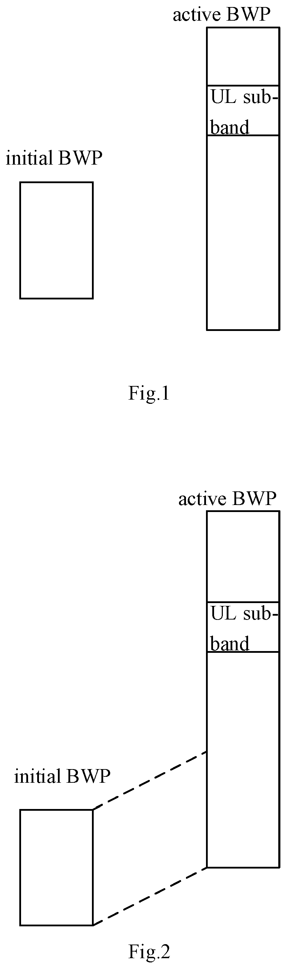

For situation 1 in the related art, if the position of the UL sub-band is not within the initial BWP range, as shown in FIG. 1, the uplink sub-band resource cannot be addressed according to the related art.

For situation 2 in the related art, if the UL sub-band is not located in the first N RBs of the active BWP, as shown in FIG2, where N is the quantity of RBs in the initial BWP, the uplink sub-band resource cannot be addressed according to the related art.

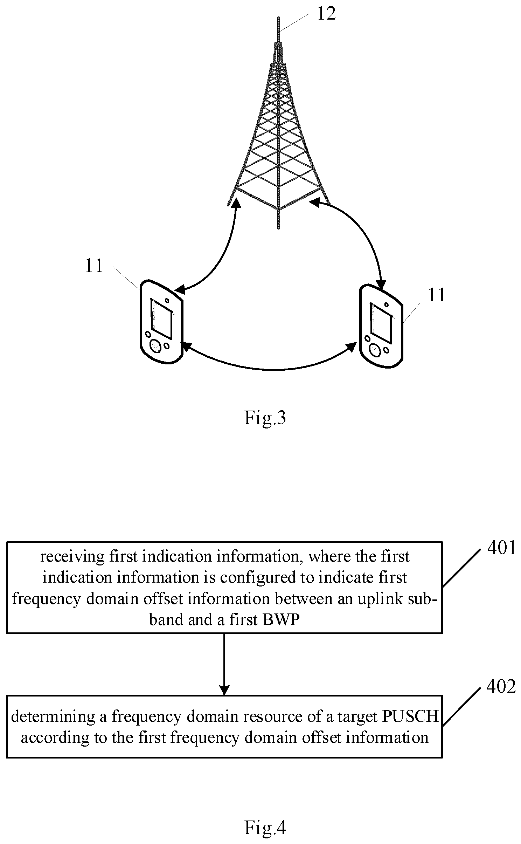

FIG.3 shows a block diagram of a wireless communication system applicable to the embodiments of the present disclosure. The wireless communication system includes a terminal device 11 and a network side device 12. The terminal device 11 may also be referred to as a terminal or a user terminal (UE). It should be noted that the specific type of the terminal 11 is not limited in the embodiments of the present disclosure. The network side device 12 may be a base station or a core network. It should be noted that in the embodiments of the present disclosure, only a base station in the NR system is taken as an example, but the specific type of the base station is not limited.

In the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "a plurality of" in the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

provided by the embodiments of the present disclosure can be applicable to a variety of systems, especially 5G systems. For example, the applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal equipment and network equipment. The system may also include a core network part, such as an evolved packet system (EPS), a 5G system (5G System, 5GS), etc.

of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device of the present disclosure may be a base station, which may include multiple cells providing services for terminals. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional multiple input multiple output technology (2-dimention MIMO, 2D-MIMO), three-dimensional multiple input multiple output technology (3-dimention MIMO, 3D-MIMO), full-dimensional multiple input multiple output technology (Full Dimension MIMO, FD-MIMO) or massive multiple input multiple output technology (massive-MIMO), or it can be diversity transmission or precoded transmission or beamforming transmission, etc.

As shown in FIG. 4, an embodiment of the present disclosure provides a method for determining frequency domain resource, which is performed by a terminal. The method includes:
Step 401: receiving first indication information, where the first indication information is configured to indicate first frequency domain offset information between an uplink sub-band and a first bandwidth part (BWP);
Step 402: determining a frequency domain resource of a target PUSCH according to the first frequency domain offset information

Optionally, the target PUSCH is a PUSCH scheduled by a UL grant in a medium access control (Medium Access Control, MAC) random access response (RAR) or a PUSCH scheduled by a DCI scrambled by a TC-RNTI.

Optionally, the first indication information may be semi-statically configured by RRC, or dynamically configured by RAR grant or DCI, for example, adding an additional field in an existing RAR grant or DCI or reusing some bits or bit states in an existing DCI to indicate the first frequency domain offset information.

The embodiment of the present disclosure indicates the frequency domain offset of the uplink sub-band and the first BWP through the first indication information, thereby indirectly indicating the frequency domain resource position of the target PUSCH, thereby ensuring that the target PUSCH scheduled on the uplink sub-band can be addressed.

In an embodiment of the present disclosure, step 402 includes:
determining the frequency domain resource of the target PUSCH according to the first frequency domain offset information and frequency domain resource allocation (FDRA) information;
The number of virtual resource blocks VRB addressed by the FDRA information is: the quantity of RBs included in the initial BWP, or the quantity of RBs included in the uplink sub-band. The number of virtual resource blocks VRB addressed by the FDRA information is: the quantity of RBs included in the initial BWP, or the quantity of RBs included in the uplink sub-band;
In an embodiment of the present disclosure, the first BWP is an activated BWP (active BWP); accordingly, determining the frequency domain resource of the target PUSCH according to the first frequency domain offset information and the frequency domain resource allocation (FDRA) information includes:
   according to the number of the VRB addressed by the FDRA information and the first frequency domain offset information, the VRB is mapped to a physical resource block (PRB) to obtain the frequency domain resource of the target PUSCH. Optionally, when mapping the VRB and the PRB, a first frequency domain offset (which may be referred to as offset 1) indicated by the first frequency domain offset information is added.

In this embodiment, the first indication information indicates frequency domain offset information between the uplink sub-band and the activated BWP.

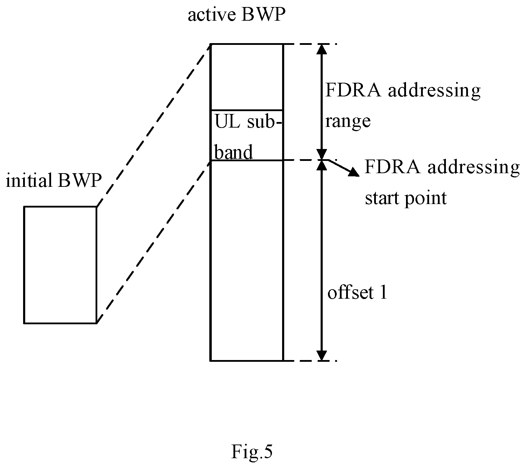

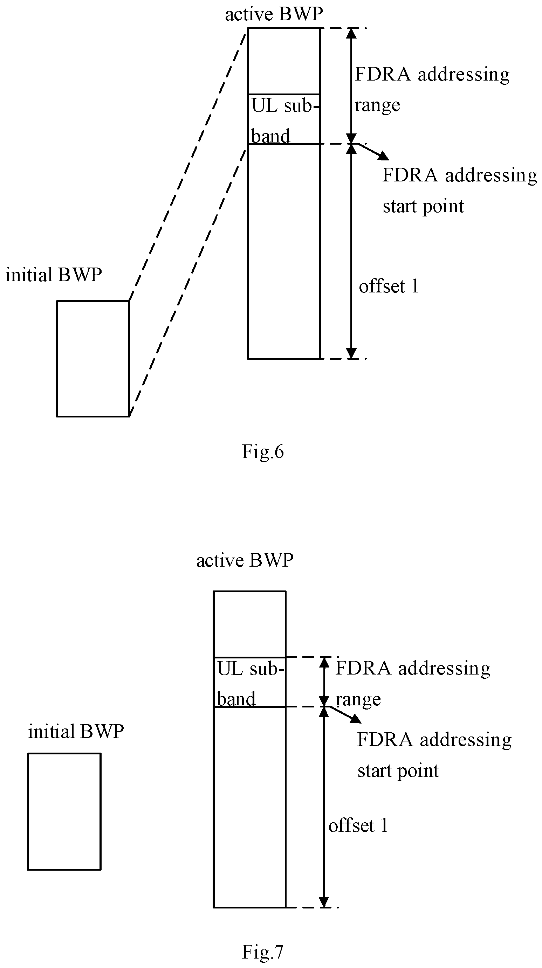

Optionally, in the case where the frequency domain resource allocation of the PUSCH is based on the bandwidth of the initial BWP, the number of VRBs addressed by the FDRA information is: the quantity of RBs N contained in the initial BWP. For example, the VRB number addressed by the FDRA information is a value in the range from 0 to N-1 or 1 to N (N is the quantity of RBs in the initial BWP). As shown in Figures 5 and 6, when mapping VRBs and PRBs, a frequency domain offset offset 1 is added. For example, if the VRB number is n, the corresponding PRB number is n+offset 1. As shown in Figures 5 and 6, offset 1 = the starting RB number of the uplink sub-band - the starting RB number of the activated BWP.

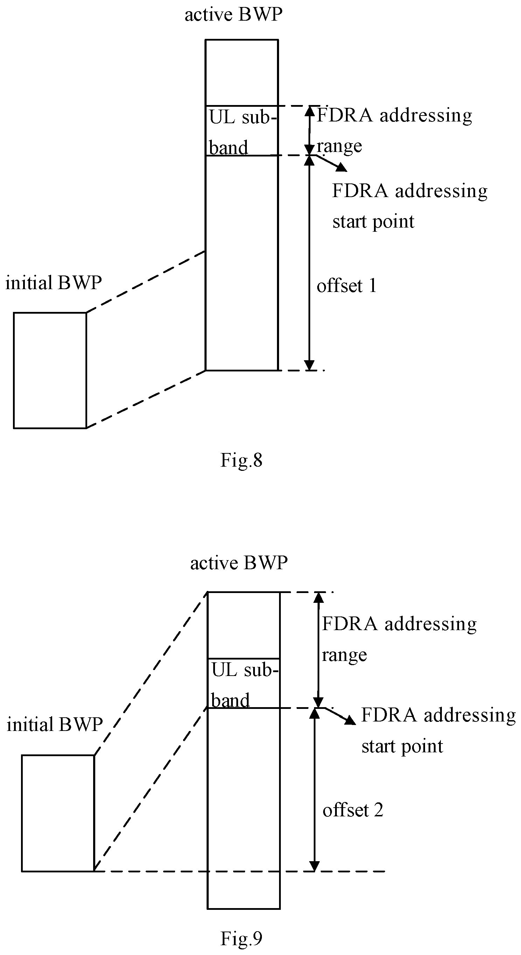

Optionally, in the case where the frequency domain resource allocation of PUSCH is based on the bandwidth of the uplink sub-band, the number of VRBs addressed by the FDRA information is: the quantity of RBs contained in the uplink sub-band M. For example, the VRB number addressed by the FDRA information is a value in the range from 0 to M-1 or 1 to M (M is the quantity of RBs contained in the initial sub-band). As shown in Figures 7 and 8, when mapping VRBs and PRBs, a frequency domain offset offset 1 is added. For example, if the VRB number is n, the corresponding PRB number is n+offset 1. As shown in Figures 7 and 8, offset 1 = the starting RB number of the uplink sub-band - the starting RB number of the activated BWP.

In another embodiment of the present disclosure, the first BWP is an initial BWP; accordingly, determining the frequency domain resource of the target PUSCH according to the first frequency domain offset information and the frequency domain resource allocation (FDRA) information includes:

according to the number of the VRB addressed by the FDRA information, the first frequency domain offset information, and the second frequency domain offset information between the initial BWP and the activated BWP, the VRB is mapped to the PRB to obtain the frequency domain resource of the target PUSCH. Optionally, when mapping the VRB and the PRB, the first frequency domain offset indicated by the first frequency domain offset information and the second frequency domain offset indicated by the second frequency domain offset information are added.

The second frequency domain offset is determined by the terminal according to the frequency domain position of the initial BWP and the frequency domain position of the activated BWP configured by the network. For example, the frequency domain offset between the initial BWP and the activated BWP = the starting RB number of the initial BWP - the starting RB number of the activated BWP.

In this embodiment, the first indication information indicates a frequency domain offset (which may be referred to as offset 2) between the uplink sub-band and the initial BWP.

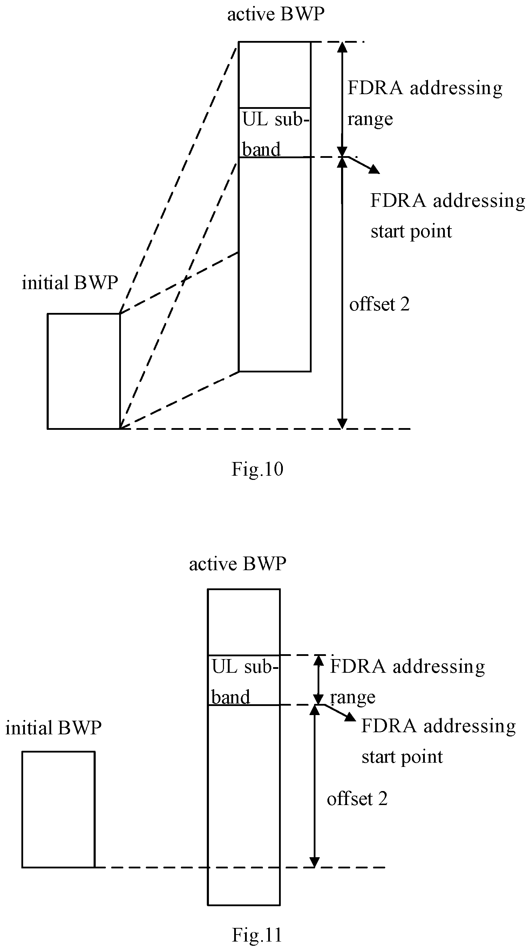

Optionally, in the case where the frequency domain resource allocation of the PUSCH is based on the bandwidth of the initial BWP, the number of VRBs addressed by the FDRA information is: the quantity of RBs contained in the initial BWP, N. When mapping VRBs and PRBs, the frequency domain offset of the initial BWP start position and the activated BWP start position is added, as well as the frequency domain offset 2 of the uplink sub-band start position and the initial BWP start position. For example, as shown in Figures 9 and 10, if the VRB number is n, the corresponding PRB number is n+ (initial BWP start RB number-activated BWP start RB number)+offset 2, where offset 2=start RB number of the uplink sub-band-start RB number of the initial BWP.

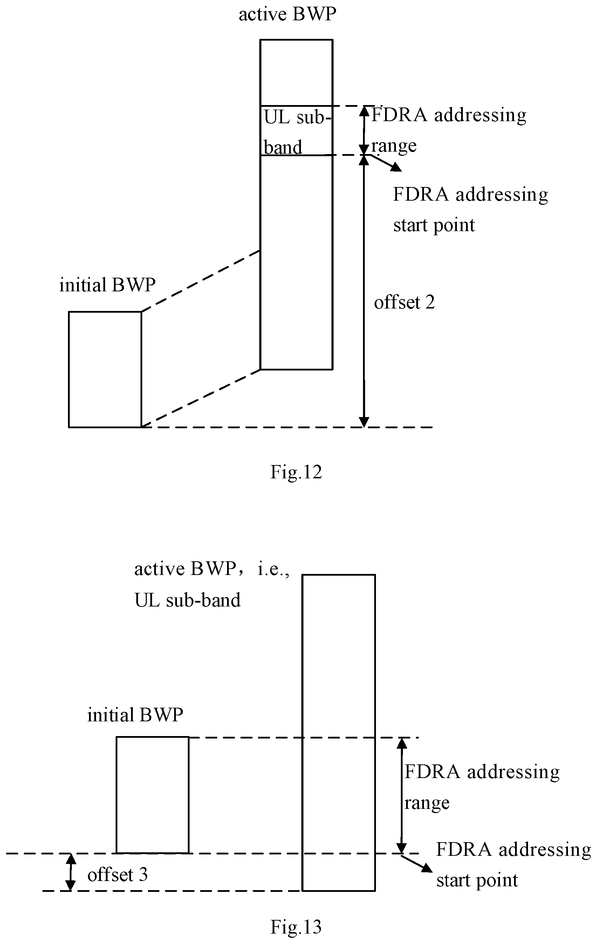

Optionally, in the case where the frequency domain resource allocation of the PUSCH is based on the bandwidth of the uplink sub-band, the number of VRBs addressed by the FDRA information is: the quantity of RBs contained in the uplink sub-band M. For example, the VRB number addressed by the FDRA information is a value in the range from 0 to M-1 or 1 to M (M is the quantity of RBs contained in the UL sub-band). When mapping VRBs and PRBs, the frequency domain offset of the initial BWP start position and the activated BWP start position is added, as well as the frequency domain offset 2 of the UL sub-band start position and the initial BWP start position. For example, as shown in Figures 11 and 12, if the VRB number is n, the corresponding PRB number is n+(initial BWP start RB number-activated BWP start RB number)+offset 2, where offset 2=start RB number of the uplink sub-band-initial BWP start RB number.

In another embodiment of the present disclosure, the first BWP is an initial BWP, and the activated BWP is the same as the uplink sub-band (that is, the uplink sub-band is used as the activated uplink BWP); accordingly, determining the frequency domain resource of the target PUSCH according to the first frequency domain offset information and the frequency domain resource allocation (FDRA) information includes:

according to the number of the VRB addressed by the FDRA information and the first frequency domain offset information, the VRB is mapped to a PRB to obtain the frequency domain resource of the target PUSCH.

In this case, the first frequency domain offset indicated by the first frequency domain offset information is equivalent to the frequency domain offset between the initial BWP and the activated BWP (which may be referred to as offset 3 for short).

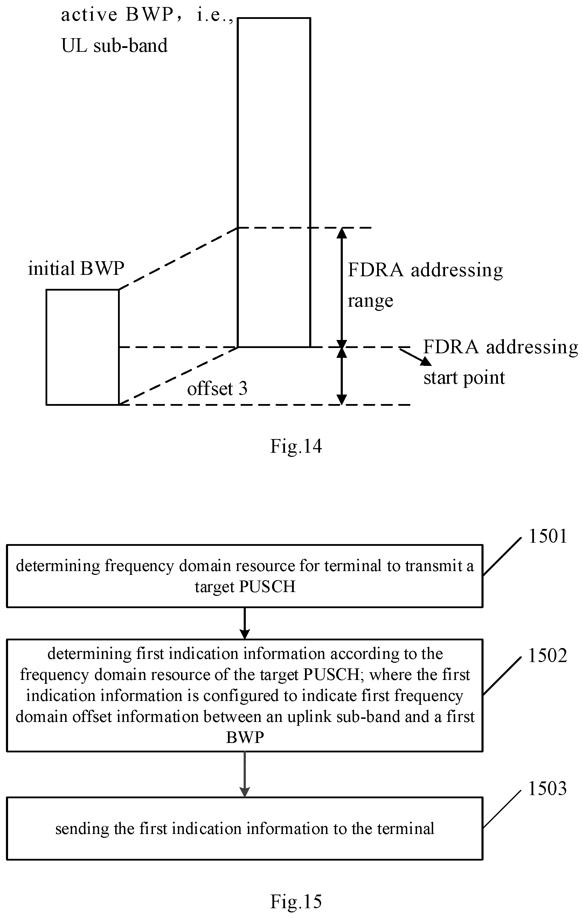

For example, the VRB number assigned by FDRAis based on the initial BWP indication, such as the quantity of RBs contained in the initial BWP, N. The VRB number addressed by FDRA information is a value in the range of 0 to N-1 or 1 to N (N is the quantity of RBs contained in the initial BWP), as shown in Figures 13 and 14. When mapping from VRB to PRB, an offset is added, which is the offset 3 between the initial BWP start RB and the activated BWP start RB.

In another embodiment of the present disclosure, the UL sub-band is used as the activated BWP, and the VRB number assigned by the FDRA is based on the initial BWP indication. Optionally, in this scenario, the terminal not only needs frequency domain offset information but also needs to know the UL sub-band size, SCS and CP information.

Case 1: When the initial BWP is the same as the activated BWP or the initial BWP is within the activated BWP range and the SCS and CP are the same, the VRB index allocated by FDRA is based on the initial BWP indication (i.e., the VRB indicates the starting RB position and length within the initial BWP range), and an offset is added when mapping from VRB to PRB, which is the offset between the starting RB of the initial BWP and the starting RB of the activated BWP;

Case 2: For cases other than case 1, the frequency domain resource allocation of PUSCH is based on the starting RB position of the activated BWP and is allocated according to the bandwidth of the initial BWP.

In another embodiment of the present disclosure, the UL sub-band is used as the activated BWP, and the VRB number allocated by FDRA is the UL sub-band width; optionally, in this scenario, the terminal not only needs frequency domain offset information but also needs to know the UL sub-band size, SCS and CP information. Then the VRB of FDRA is based on the UL sub-band, that is, the FDRA field indicates that the VRB index is a value ranging from 0 to K-1 or 1 to K (K is the quantity of RBs contained in the uplink sub-band).

As an embodiment, the method further includes:
according to relevant parameters of the scheduled target PUSCH, determining frequency domain resource of the target PUSCH according to the first frequency domain offset information.

Optionally, determining, according to relevant parameters of the scheduled target PUSCH, a frequency domain resource of the target PUSCH according to the first frequency domain offset information includes:
if the scheduled target PUSCH is within the time domain range corresponding to the uplink sub-band, determining the frequency domain resource of the target PUSCH according to the first frequency domain offset information;

As an embodiment, the method further includes:
if the scheduled target PUSCH is configured in a cell-level downlink symbol or a flexible symbol, determining a frequency domain resource of the target PUSCH according to the first frequency domain offset information;

Optionally, the terminal determines, according to the "TDD-UL-DL-Configcommon" information, that the scheduled target PUSCH is configured in a cell-level downlink symbol or a flexible symbol, and determines the frequency domain resource of the target PUSCH according to the first frequency domain offset information.

As an embodiment, the method further includes:
according to the physical random access channel (PRACH) resource corresponding to the target PUSCH, determining the frequency domain resource of the target PUSCH according to the first frequency domain offset information; where the PRACH resource and the resource determination method of the target PUSCH have a mapping relationship;

For example, a set of PRACH time/frequency/code resources are defined for the method of determining the frequency domain resource of the target PUSCH according to the first frequency domain offset information and other resource determination methods, and the terminal determines the corresponding resource determination method according to the time/frequency/code resources used to send the PRACH. Among them, other resource determination methods can be understood as existing resource determination methods, which are not described in detail in this disclosure. For example, the time/frequency/ code resource 1 of PRACH corresponds to the resource that determines the frequency domain resource of the target PUSCH according to the first frequency domain offset information, and the time/frequency/ code resource 2 of PRACH corresponds to other resource determination methods. If the time/frequency/ code resource used by the terminal to send PRACH belongs to resource 1, the frequency domain resource determination method is: determine the frequency domain resource of the target PUSCH according to the first frequency domain offset information.

As an embodiment, the method further includes:
the receiving network device sends second indication information; the second indication information is configured to indicate whether the terminal determines the frequency domain resource of the target PUSCH according to the first frequency domain offset information;
according to the second indication information, determining whether to determine the frequency domain resource of the target PUSCH according to the first frequency domain offset information.

For example, the second indication information directly indicates whether the terminal adopts the first frequency domain offset information to determine the frequency domain resource of the target PUSCH.

Optionally, the second indication information may be a dynamic indication. For example, a reserved bit in the RAR UL grant indicates whether the corresponding PUSCH transmission uses the first frequency domain offset information to determine the frequency domain resource; or an additional field is added to the existing DCI or some bits or bit states in the existing DCI are reused to indicate whether the corresponding PUSCH transmission uses the first frequency domain offset information to determine the frequency domain resource.

As an embodiment, the first indication information is further configured to indicate whether the terminal determines the frequency domain resource of the target PUSCH according to the first frequency domain offset information. In other words, the first frequency domain offset information and the resource determination method are jointly indicated by the first indication information.

As an embodiment, the method further includes:
if the terminal receives the first indication information, determining the frequency domain resource of the target PUSCH according to the first frequency domain offset information.

In other words, whether the terminal receives the first indication information is indirectly indicated to indicate whether the terminal determines the frequency domain resource of the PUSCH according to the first frequency domain offset information.

As an embodiment, the method further includes:
if the terminal receives the first indication information and the scheduled target PUSCH is configured in the cell-level downlink symbol or flexible symbol, determining the frequency domain resource of the target PUSCH according to the first frequency domain offset information; otherwise, the frequency domain resource of the target PUSCH are determined according to the existing method.

If the first indication information is semi-statically configured, the corresponding resource determination method is also semi-statically configured. Once triggered, the terminal always determines the frequency domain resource of PUSCH in a certain way for a period of time, and the corresponding terminal is always scheduled on UL/flexible resources or sub-bands, which limits the flexibility of PUSCH scheduling/transmission. Therefore, further, the terminal can refer to the uplink and downlink information configured by TDD-UL-DL-Configcommon. If PUSCH is scheduled on UL/flexible symbols, even if the UE receives the first indication information, the UE still determines the frequency domain resource in the existing way; only when the terminal receives the first indication information and PUSCH is scheduled on DL/flexible symbols, the terminal uses the first frequency domain offset information to determine the frequency domain resource of PUSCH.

As an embodiment, the method further includes:
the bit state of the indication information is configured to indicate whether the first frequency domain offset information is used to determine the frequency domain resource of the PUSCH. When the bit state indicates that the first frequency domain offset information is used to determine the frequency domain resource of the PUSCH, the first frequency domain offset information can also be indicated at the same time.

For example, the resource determination method is indicated by the bit state of the first indication information, for example, the first indication information is indicated by M states of X bits, where 1 bit state indicates that the frequency domain resource determination method is an existing method, and the remaining M-1 states indicate that the resource determination method is to use the first frequency domain offset information to determine the frequency domain resource of the PUSCH and M-1 different first frequency domain offset information.

In summary, in the embodiment of the present disclosure, the frequency domain offset between the uplink sub-band and the first BWP is indicated by the first indication information, so as to assist the terminal in determining the frequency domain resource of the PUSCH scheduled by the RAR UL grant or the PUSCH scheduled by the TC-RNTI scrambled DCI according to the first indication information, thereby enabling the PUSCH to be scheduled at any uplink sub-band position.

As shown in FIG. 15, the embodiment of the present disclosure further provides a frequency domain resource indication method, which is performed by a network device and includes:
Step 1501: determining frequency domain resource for terminal to transmit a target physical uplink shared channel (PUSCH);
Step 1502: determining first indication information according to the frequency domain resource of the target PUSCH; where the first indication information is configured to indicate first frequency domain offset information between an uplink sub-band and a first bandwidth part (BWP);
Step 1503: sending the first indication information to the terminal.

Optionally, the target PUSCH is a PUSCH scheduled by UL grant in MAC RAR or a PUSCH scheduled by DCI scrambled by TC-RNTI.

Optionally, the first indication information may be semi-statically configured by RRC, or dynamically configured by RAR grant or DCI, for example, adding an additional field in an existing RAR grant or DCI or reusing some bits or bit states in an existing DCI to indicate the first frequency domain offset information.

As an embodiment, the method further includes:
sending frequency domain resource allocation (FDRA) information to the terminal; the number of virtual resource blocks VRB addressed by the FDRA information is: the quantity of RBs included in the initial BWP, or the quantity of RBs included in the uplink sub-band;
the FDRA information and the first indication information are used by the terminal to determine the frequency domain resource of the target PUSCH.

The embodiment of the present disclosure indicates the frequency domain offset of the uplink sub-band and the first BWP through the first indication information, thereby indirectly indicating the frequency domain resource position of the target PUSCH, thereby ensuring that the target PUSCH scheduled on the uplink sub-band can be addressed.

In an embodiment of the present disclosure, the physical resource block (PRB) corresponding to the frequency domain resource of the target PUSCH is determined by the information of the VRB and the first frequency domain offset information; optionally, when mapping the VRB and PRB, the first frequency domain offset indicated by the first frequency domain offset information is added; where the first BWP is an activated BWP.

In another embodiment of the present disclosure, the PRB corresponding to the frequency domain resource of the target PUSCH is determined by the VRB information, the first frequency domain offset information, and the second frequency domain offset information between the initial BWP and the activated BWP; optionally, when mapping the VRB and the PRB, the first frequency domain offset indicated by the first frequency domain offset information and the second frequency domain offset indicated by the second frequency domain offset information are added. The first BWP is the initial BWP.

In another embodiment of the present disclosure, the PRB corresponding to the frequency domain resource of the target PUSCH is determined by the information of the VRB and the first frequency domain offset information; optionally, when mapping the VRB and the PRB, the first frequency domain offset indicated by the first frequency domain offset information is added; where, the first BWP is the initial BWP, and the activated BWP is the same as the uplink sub-band (the uplink sub-band serves as the activated uplink BWP).

As an embodiment, the method further includes:
according to a predefined first rule, determining the frequency domain resource of the target PUSCH indicated by the first frequency domain offset information; where the first rule includes at least one of the following:
the target PUSCH is configured within a time domain range corresponding to the uplink sub-band;
the target PUSCH is configured in a cell-level downlink symbol or a flexible symbol;
the physical random access channel (PRACH) resources received by the network device, and the mapping relationship between the PRACH resources and the resource indication mode of the target PUSCH. Optionally, the mapping relationship is predefined or broadcast or configured by the network.

For example, a set of PRACH time/frequency/code resources are defined for the method of indicating the frequency domain resource of the target PUSCH through the first frequency domain offset information and other resource indication methods, and the terminal determines the corresponding resource indication method according to the time/frequency/code resources used to send PRACH. Among them, other resource indication methods can be understood as existing frequency domain resource indication methods, which are not described in detail in this disclosure; for example, the time/frequency/code resource 1 of PRACH corresponds to the frequency domain resource of the target PUSCH indicated by the first frequency domain offset information, and the time/frequency/ code resource 2 of PRACH corresponds to other resource indication methods. If the time/frequency/code resources used by the terminal to send PRACH belong to resource 1, the frequency domain resource indication method is: indicating the frequency domain resource of the target PUSCH through the first frequency domain offset information.

As an embodiment, the method further includes:
by sending the first indication information, the terminal is indirectly instructed to determine the frequency domain resource of the target PUSCH according to the first frequency domain offset information.

Alternatively, by sending the first indication information and the configured target PUSCH in a downlink symbol or a flexible symbol at the cell level, the terminal is indirectly instructed to determine the frequency domain resource of the target PUSCH according to the first frequency domain offset information and the FDRA information.

For example, the terminal can refer to the uplink and downlink information configured by TDD-UL-DL-Configcommon. If the PUSCH is scheduled on the UL/flexible symbol, even if the UE receives the first indication information, the UE still determines the frequency domain resource according to the existing scheme; only when the terminal receives the first indication information and the PUSCH is scheduled on the DL/flexible symbol, the terminal determines the frequency domain resource of the target PUSCH according to the first frequency domain offset information.

As an embodiment, the method further includes:
sending second indication information to the terminal, where the second indication information is configured to instruct the terminal to determine the frequency domain resource of the target PUSCH according to the first frequency domain offset information.

For example, the second indication information directly indicates whether the terminal determines the frequency domain resource of the target PUSCH according to the first frequency domain offset information.

Optionally, the second indication information may be a dynamic indication. For example, a reserved bit in the RAR UL grant indicates whether the corresponding PUSCH transmission determines the frequency domain resource according to the first frequency domain offset information; or an additional field is added to the existing DCI or some bits or bit states in the existing DCI are reused to indicate whether the corresponding PUSCH transmission determines the frequency domain resource according to the first frequency domain offset information.

As an embodiment, the first indication information is further configured to indicate whether the terminal determines the frequency domain resource of the target PUSCH according to the first frequency domain offset information. In other words, the first frequency domain offset information and the resource determination method are jointly indicated by the first indication information.

In summary, in the embodiment of the present disclosure, the frequency domain offset between the uplink sub-band and the first BWP is indicated by the first indication information, thereby assisting the terminal to determine the frequency domain resource of the PUSCH scheduled by the RAR UL grant or the PUSCH scheduled by the TC-RNTI scrambled DCI according to the first indication information, so that the PUSCH can be scheduled at any uplink sub-band position.

In order to more clearly describe the interaction between the frequency domain resource determination method on the terminal side and the frequency domain resource indication method on the network side provided by the embodiments of the present disclosure, several embodiments are described below.

Example 1: indicating the first frequency domain offset information through the first indication information, and determining the resource determination method through the predefined rule/RRC message

In this solution, the first frequency domain offset information is explicitly indicated by the first indication information, and the resource determination method (including method 1 and method 2) is determined according to a predefined rule or other RRC message. Among them, method 1 is to determine the frequency domain resource of the target PUSCH according to the first frequency domain offset information; method 2 can be understood as the method of determining the frequency domain resource of the target PUSCH in the related art.

One implementation method is: the base station configures the time domain range corresponding to the uplink sub-band in advance through a broadcast message, such as SIB1, or other RRC-specific messages. If the scheduled PUSCH is within the time domain range, the UE determines the frequency domain resource according to method 1; otherwise, the UE determines the frequency domain resource according to method 2. Alternatively, if the scheduled PUSCH is within the range of TDD-UL-DL-Configcommon configured as UL/Flexible symbol, the UE determines the frequency domain resource according to method 2; otherwise, the UE determines the frequency domain resource according to method 1.

Another implementation method is: for method 1 and method 2, a set of PRACH time/frequency/code resources are defined/configured respectively, and the UE determines the frequency domain resource determination method as method 1 or method 2 according to the frequency domain resource determination method corresponding to the time/frequency/ code resource used to send the PRACH. For example, the time/ frequency/ code resource 1 of the PRACH corresponds to method 1, and the time/frequency/ code resource 2 of the PRACH corresponds to method 2. If the time/frequency/ code resource used by the UE to send the PRACH belongs to resource 1, the frequency domain resource determination method is method 1, otherwise it is method 2.

The UL sub-band width information may be unknown to the UE, pre-defined by the protocol, or configured by the network through RRC/DCI.

Example 2: Indicating the first frequency domain offset information through the first indication information, and indicating the resource determination method through the second indication information

In this solution, the resource determination method (including method 1 and method 2) is indicated by the second indication information, and the first frequency domain offset information is determined by the first indication information. Among them, method 1 is to determine the frequency domain resource of the target PUSCH according to the first frequency domain offset information; method 2 can be understood as the method of determining the frequency domain resource of the target PUSCH in the relevant technology. The second indication information can be a dynamic indication, for example:
determining the frequency domain resource through first or second method by indicating the corresponding PUSCH transmission through the reserved bit in the RAR; or,
adding an additional field to the existing DCI or reusing some bits or bit states in the existing DCI to indicate that the corresponding PUSCH transmission determines the frequency domain resource according to the first method or the second method.

The first indication information may be semi-statically configured by RRC, or dynamically configured by RAR grant or DCI, for example, adding an additional field in the existing RAR grant or DCI or reusing some bits or bit states in the existing DCI to indicate the first frequency domain offset information.

The UE determines the resource determination method according to the second indication information. If the second indication information indicates that the frequency domain resource determination method is method one, the UE determines the frequency domain resource according to method one; if the second indication information indicates that the resource determination method is method two, the UE obtains the first frequency domain offset information according to the semi-static/dynamic signaling, and then finally determines the frequency domain resource.

The UL sub-band width information may be unknown to the UE, pre-defined by the protocol, or configured by the network through RRC/DCI.

### Example 3: Indicating the first frequency domain offset information and/or frequency domain resource determination method through the first indication information

One possible implementation method is: distinguishing whether the resource determination method is method 1 or method 2 by the bit state of the first indication information, and when the bit state indicates method 1, the offset information can also be indicated at the same time. Method 1 is to determine the frequency domain resource of the target PUSCH according to the first frequency domain offset information; method 2 can be understood as a method for determining the frequency domain resource of the target PUSCH in the related art.

For example, the indication information is indicated by M states of X bits, where 1 bit state indicates that the frequency domain resource determination mode is mode 2, and the remaining M-1 states indicate that the frequency domain resource determination mode is mode 1 and M-1 different frequency domain offset information. For example, X=3, M=8, where the bit state 000 indicates that the frequency domain resource determination mode is mode 2, and the bit states 001~111 indicate that the resource determination mode is mode 1 and the corresponding 7 offset values.

The first indication information may be a newly added field in the existing RAR UL grant or TC-RNTI scrambled DCI format 0_0, or may be all or part of the existing field reused, or may be a reuse of part of the bit states of the existing field.

The offset value may be in units of RBs or in units of RB groups, where the quantity of RBs contained in the RB group may be a value predefined in the protocol, such as 8, or may be configured by the base station through RRC signaling. The offset value may be predefined in the protocol or may be configured by RRC signaling.

This solution is applicable to the following scenarios: For example, when the base station does not pre-notify the UE of the time domain and frequency domain positions corresponding to the UL sub-band, this solution can schedule the PUSCH on the UL sub-band, and the UL sub-band is not within the initial BWP range or the UL sub-band is not within the first N (the quantity of RBs of the initial BWP) RBs of the activated BWP.

Another possible implementation method is: distinguishing the frequency domain resource determination method by the presence or ab sence of the first indication information, when there is no first indication information, determining the frequency domain resource according to method two, when there is the first indication information, determining the frequency domain resource according to method one, and the first indication information indicates the offset value.

The first indication information may be semi-statically configured by RRC. When the base station intends to schedule the PUSCH of the target UE on the UL sub-band, the base station sends the first indication information to the UE. After receiving the RRC signaling, the UE determines the frequency domain resource according to method one. If the UE does not receive the RRC signaling, the UE determines the frequency domain resource according to method two.

Another possible implementation method is: distinguishing the frequency domain resource determination method by the presence or absence of indication information and the time domain position of PUSCH. If the UE does not receive the RRC signaling, the UE determines the frequency domain resource according to method 2. After the UE receives the RRC signaling, the UE also needs to refer to the TDD-UL-DL-Configcommon information. If the PUSCH scheduling is configured as a DL/Flexible symbol in TDD-UL-DL-Configcommon, the UE determines the frequency domain resource according to method 1; if the PUSCH scheduling is configured as a UL symbol in TDD-UL-DL-Configcommon, the UE determines the frequency domain resource according to method 2; or

If PUSCH scheduling is configured as DL symbols in TDD-UL-DL-Configcommon, the UE determines frequency domain resource according to method one; if PUSCH scheduling is configured as UL/Flexible symbols in TDD-UL-DL-Configcommon, the UE determines frequency domain resource according to method two.

The offset value may be in units of RBs; or in units of RB groups, where the quantity of RBs contained in the RB group may be a value predefined in the protocol, such as 8, or may be configured by the base station through RRC signaling.

The UL sub-band width information may be unknown to the UE, pre-defined by the protocol, or configured by the network through RRC/DCI.

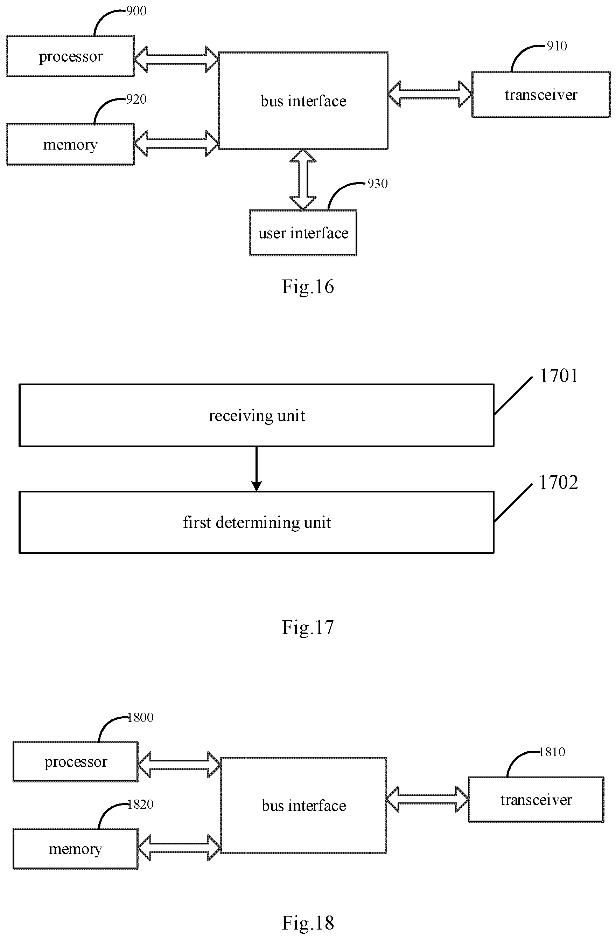

As shown in FIG. 16, the embodiment of the present disclosure further provides a terminal, including a memory 920, a transceiver 910, and a processor 900:
the memory 920 is configured to store a computer program; the transceiver 910 is configured to send and receive data under a control of the processor 900; and the processor 900 is configured to read the computer program in the memory 920 to perform:
receiving first indication information, where the first indication information is configured to indicate first frequency domain offset information between an uplink sub-band and a first bandwidth part (BWP);
determining a frequency domain resource of a target PUSCH according to the first frequency domain offset information.

Optionally, the processor is further configured to read the computer program in the memory to perform:
determining the frequency domain resource of the target PUSCH according to the first frequency domain offset information and frequency domain resource allocation (FDRA) information;
where a quantity of virtual resource block (VRB) addressed by the FDRA information is: a quantity of RBs included in an initial BWP, or a quantity of RBs included in an uplink sub-band.

Optionally, the first BWP is an activation BWP;
the processor is configured to read the computer program in the memory to perform:
according to a number of the VRB addressed by the FDRA information and the first frequency domain offset information, mapping the VRB to a physical resource block (PRB) to obtain a frequency domain resource of the target PUSCH.

Optionally, the first BWP is an initial BWP;
the processor is configured to read the computer program in the memory to perform:
according to the number of the VRB addressed by the FDRA information, the first frequency domain offset information, and the second frequency domain offset information between the initial BWP and the activated BWP, mapping the VRB to a PRB to obtain the frequency domain resource of the target PUSCH.

Optionally, the first BWP is an initial BWP, and the activated BWP is the same as the uplink sub-band;
the processor is configured to read the computer program in the memory to perform:
according to the number of the VRB addressed by the FDRA information and the first frequency domain offset information, mapping the VRB to a PRB to obtain the frequency domain resource of the target PUSCH.

Optionally, the processor is further configured to read a computer program in the memory to perform:
according to relevant parameters of a scheduled target PUSCH, determining a frequency domain resource of the target PUSCH according to the first frequency domain offset information.

Optionally, the processor is further configured to read the computer program in the memory to perform:
if the scheduled target PUSCH is within a time domain range corresponding to the uplink sub-band, determining the frequency domain resource of the target PUSCH according to the first frequency domain offset information;
   or,
if the scheduled target PUSCH is configured in a cell-level downlink symbol or a flexible symbol, determining the frequency domain resource of the target PUSCH according to the first frequency domain offset information;
   or,
according to the physical random access channel (PRACH) resource corresponding to the target PUSCH, determining the frequency domain resource of the target PUSCH according to the first frequency domain offset information; where there exists a mapping relationship the PRACH resource and the resource determination method of the target PUSCH.

Optionally, the processor is further configured to read a computer program in the memory to perform:
receiving second indication information sent by a network device; where the second indication information is for the terminal to determine the frequency domain resource of the target PUSCH according to the first frequency domain offset information;
according to the second indication information, determining the frequency domain resource of the target PUSCH according to the first frequency domain offset information.

Optionally, the first indication information is further configured to instruct the terminal to determine the frequency domain resource of the target PUSCH according to the first frequency domain offset information.

Optionally, the processor is further configured to read a computer program in the memory to perform:
if the terminal receives the first indication information, determining the frequency domain resource of the target PUSCH according to the first frequency domain offset information;
   or,
if the terminal receives the first indication information and the scheduled target PUSCH is configured in a cell-level downlink symbol or a flexible symbol, determining the frequency domain resource of the target PUSCH according to the first frequency domain offset information.

In Figure 16, the bus architecture may include any number of interconnected buses and bridges, specifically one or more processors represented by processor 1600 and various circuits of memory represented by memory 1620 are linked together. The bus architecture can also link various other circuits such as peripherals, voltage regulators, and power management circuits together, which are all well known in the art, so they are not further described herein. The bus interface provides an interface. The transceiver 1610 can be a plurality of components, that is, including a transmitter and a receiver, providing a unit for communicating with various other devices on a transmission medium, and these transmission media include transmission media such as wireless channels, wired channels, and optical cables. For different user devices, the user interface 1630 can also be an interface that can be connected to the required devices externally and internally, and the connected devices include but are not limited to a keypad, a display, a speaker, a microphone, a joystick, etc.

The processor 1600 is responsible for managing the bus architecture and general processing, and the memory z20 can store data used by the processor 1600 when performing operations.

Optionally, the processor 1600 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.

The processor executes any of the methods provided by the embodiments of the present disclosure according to the obtained executable instructions. The processor and the memory can also be arranged physically separately.

In embodiment of the present disclosure, the frequency domain offset between the uplink sub-band and the first BWP is indicated by the first indication information, so as to assist the terminal in determining the frequency domain resource of the PUSCH scheduled by the RAR UL grant or the PUSCH scheduled by the TC-RNTI scrambled DCI according to the first indication information, thereby enabling the PUSCH to be scheduled at any uplink sub-band position.

It should be noted that the terminal provided in the embodiment of the present disclosure is a terminal capable of executing the above-mentioned frequency domain resource determination method. All embodiments of the above-mentioned frequency domain resource determination method are applicable to the terminal and can achieve the same or similar beneficial effects, which will not be repeated here.

As shown in FIG. 17, the embodiment of the present disclosure further provides a frequency domain resource determination apparatus, including:
a receiving unit 1701, configured to receive first indication information, where the first indication information is configured to indicate first frequency domain offset information between an uplink sub-band and a first bandwidth part (BWP);
a first determining unit 1702, configured to determine a frequency domain resource of a target PUSCH according to the first frequency domain offset information.

In embodiment of the present disclosure, the frequency domain offset between the uplink sub-band and the first BWP is indicated by the first indication information, so as to assist the terminal in determining the frequency domain resource of the PUSCH scheduled by the RAR UL grant or the PUSCH scheduled by the TC-RNTI scrambled DCI according to the first indication information, thereby enabling the PUSCH to be scheduled at any uplink sub-band position.

It should be noted that the frequency domain resource determination apparatus provided in the embodiment of the present disclosure is a device capable of executing the above-mentioned frequency domain resource determination method. All embodiments of the above-mentioned frequency domain resource determination method are applicable to the device and can achieve the same or similar beneficial effects, which will not be repeated here.

As shown in FIG. 18, an embodiment of the present disclosure further provides a network device, including a memory 1820, a transceiver 1810, and a processor 1800 :
the memory 1820 is configured to store a computer program; the transceiver 1810 is configured to send and receive data under a control of the processor 1800; and the processor is configured to read the computer program in the memory 1820 to perform:
determining frequency domain resource for terminal to transmit a target physical uplink shared channel (PUSCH);
determining first indication information according to the frequency domain resource of the target PUSCH; where the first indication information is configured to indicate first frequency domain offset information between an uplink sub-band and a first bandwidth part (BWP); and
sending the first indication information to the terminal.

Optionally, the processor is further configured to read the computer program in the memory to perform:
sending frequency domain resource allocation (FDRA) information to the terminal; where a quantity of virtual resource block (VRB) addressed by the FDRA information is: a quantity of RBs included in an initial BWP, or a quantity of RBs included in an uplink sub-band;
the FDRA information and the first indication information are used by the terminal to determine the frequency domain resource of the target PUSCH.

Optionally, a physical resource block (PRB) corresponding to the frequency domain resource of the target PUSCH is determined by information of the VRB and the first frequency domain offset information;
where the first BWP is an activated BWP

Optionally, the PRB corresponding to the frequency domain resource of the target PUSCH is determined by the VRB information, the first frequency domain offset information, and the second frequency domain offset information between the initial BWP and the activated BWP;
where the first BWP is an initial BWP.

Optionally, the PRB corresponding to the frequency domain resource of the target PUSCH is determined by the information of the VRB and the first frequency domain offset information;
where the first BWP is an initial BWP, and the activated BWP is the same as the uplink sub-band.

Optionally, the processor is further configured to read a computer program in the memory to perform:
according to a predefined first rule, determining that the frequency domain resource of the target PUSCH is indicated by the first frequency domain offset information; where the first rule includes at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

Optionally, the processor is further configured to read a computer program in the memory to perform:
by sending the first indication information, indirectly instructing the terminal to determine the frequency domain resource of the target PUSCH according to the first frequency domain offset information;
   or,
by sending the first indication information and the configured target PUSCH in a downlink symbol or a flexible symbol at the cell level, the terminal is indirectly instructed to determine the frequency domain resource of the target PUSCH according to the first frequency domain offset information.

Optionally, the processor is further configured to read a computer program in the memory to perform:
sending second indication information to the terminal, where the second indication information is configured to instruct the terminal to determine the frequency domain resource of the target PUSCH according to the first frequency domain offset information.

Optionally, the first indication information is further configured to instruct the terminal to determine the frequency domain resource of the target PUSCH according to the first frequency domain offset information.

Among them, in Figure 18, the bus architecture can include any number of interconnected buses and bridges, specifically one or more processors represented by processor 1800 and various circuits of memory represented by memory 1820 are linked together. The bus architecture can also link various other circuits such as peripherals, voltage regulators, and power management circuits together, which are all well known in the art, so they are not further described herein. The bus interface provides an interface. The transceiver 1810 can be a plurality of components, that is, including a transmitter and a receiver, providing a unit for communicating with various other devices on a transmission medium, and these transmission media include transmission media such as wireless channels, wired channels, and optical cables. The processor 1800 is responsible for managing the bus architecture and general processing, and the memory 1820 can store data used by the processor 1800 when performing operations.

The processor 1800 may be a central processing unit (CPU), an application specific integrated circuit (ASIC), a field programmable gate array (FPGA) or a complex programmable logic device (CPLD). The processor may also adopt a multi-core architecture.

the present disclosure, the frequency domain offset between the uplink sub-band and the first BWP is indicated by the first indication information, thereby assisting the terminal to determine the frequency domain resource of the PUSCH scheduled by the RAR UL grant or the PUSCH scheduled by the TC-RNTI scrambled DCI according to the first indication information and the FDRA information, thereby enabling the PUSCH to be scheduled at any uplink sub-band position.

It should be noted that the network device provided in the embodiment of the present disclosure is a network device capable of executing the above-mentioned frequency domain resource indication method. All embodiments of the above-mentioned frequency domain resource indication method are applicable to the network device and can achieve the same or similar beneficial effects, which will not be repeated here.

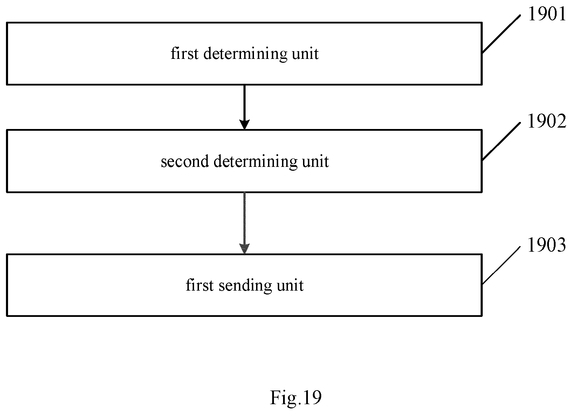

As shown in FIG. 19, the embodiment of the present disclosure further provides a frequency domain resource indication apparatus, including:
a first determining unit 1901, configured to determine frequency domain resource for terminal to transmit a target physical uplink shared channel (PUSCH);
a second determining unit 1902, configured to determine first indication information according to the frequency domain resource of the target PUSCH; where the first indication information is configured to indicate first frequency domain offset information between an uplink sub-band and a first bandwidth part (BWP); and
a first sending unit 1903, configured to send the first indication information to the terminal.

In the embodiment of the present disclosure, the frequency domain offset between the uplink sub-band and the first BWP is indicated by the first indication information, so as to assist the terminal in determining the frequency domain resource of the PUSCH scheduled by the RAR UL grant or the PUSCH scheduled by the TC-RNTI scrambled DCI according to the first indication information, thereby enabling the PUSCH to be scheduled at any uplink sub-band position.

It should be noted that the frequency domain resource indication apparatus provided in the embodiment of the present disclosure is a device capable of executing the above-mentioned frequency domain resource indication method. All embodiments of the above-mentioned frequency domain resource indication method are applicable to the device and can achieve the same or similar beneficial effects, which will not be repeated here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

The embodiment of the present disclosure also provides a processor-readable storage medium, where the processor-readable storage medium stores a computer program, where the computer program is configured to enable the processor to execute the various steps in the method embodiment described above; the processor-readable storage medium can be any available medium or data storage device that can be accessed by the processor, including but not limited to magnetic storage (such as floppy disks, hard disks, magnetic tapes, magneto-optical (MO) disks, etc.), optical storage (such as compact discs (CDs), digital versatile discs (DVDs), Blu-ray Discs (BDs), high-definition versatile discs (HVDs), etc.), and semiconductor storage (such as ROMs, erasable programmable read- only memories (EPROMs), electrically erasable programmable read-only memories (EEPROMs), non-volatile memories (NAND FLASHs), solid- state drives (SSDs), etc.).

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A method for determining frequency domain resource, performed by a terminal, comprising:
receiving first indication information, wherein the first indication information is configured to indicate first frequency domain offset information between an uplink sub-band and a first bandwidth part (BWP);
determining a frequency domain resource of a target PUSCH according to the first frequency domain offset information.

2. The method according to claim 1, wherein the determining the frequency domain resource of the target PUSCH according to the first frequency domain offset information comprises:
determining the frequency domain resource of the target PUSCH according to the first frequency domain offset information and frequency domain resource allocation (FDRA) information;
wherein a quantity of virtual resource block (VRB) addressed by the FDRA information is: a quantity of RBs comprised in an initial BWP, or a quantity of RBs comprised in an uplink sub-band.

3. The method according to claim 2, wherein the first BWP is an activation BWP;
the determining, according to the first frequency domain offset information and the FDRA information, the frequency domain resource of the target PUSCH, comprises:
according to a number of the VRB addressed by the FDRA information and the first frequency domain offset information, mapping the VRB to a physical resource block (PRB) to obtain a frequency domain resource of the target PUSCH.

4. The method according to claim 2, wherein the first BWP is an initial BWP;
the determining, according to the first frequency domain offset information and the FDRA information, the frequency domain resource of the target PUSCH, comprises:
according to the number of the VRB addressed by the FDRA information, the first frequency domain offset information, and the second frequency domain offset information between the initial BWP and the activated BWP, mapping the VRB to a PRB to obtain the frequency domain resource of the target PUSCH.

5. The method according to claim 1, wherein the first BWP is an initial BWP, and the activated BWP is the same as the uplink sub-band;
the determining the frequency domain resource of the target PUSCH according to the first frequency domain offset information and the frequency domain resource allocation (FDRA) information comprises:
according to the number of the VRB addressed by the FDRA information and the first frequency domain offset information, mapping the VRB to a PRB to obtain the frequency domain resource of the target PUSCH.

6. The method according to any one of claims 1 to 5, further comprising:
according to relevant parameters of a scheduled target PUSCH, determining a frequency domain resource of the target PUSCH according to the first frequency domain offset information.

7. The method according to claim 6, wherein the determining, according to relevant parameters of the scheduled target PUSCH, the frequency domain resource of the target PUSCH according to the first frequency domain offset information comprises:
if the scheduled target PUSCH is within a time domain range corresponding to the uplink sub-band, determining the frequency domain resource of the target PUSCH according to the first frequency domain offset information;
or,
if the scheduled target PUSCH is configured in a cell-level downlink symbol or a flexible symbol, determining the frequency domain resource of the target PUSCH according to the first frequency domain offset information;
or,
according to the physical random access channel (PRACH) resource corresponding to the target PUSCH, determining the frequency domain resource of the target PUSCH according to the first frequency domain offset information; wherein there exists a mapping relationship the PRACH resource and the resource determination method of the target PUSCH.

8. The method according to any one of claims 1 to 5, further comprising:
receiving second indication information sent by a network device; wherein the second indication information is for the terminal to determine the frequency domain resource of the target PUSCH according to the first frequency domain offset information;
according to the second indication information, determining the frequency domain resource of the target PUSCH according to the first frequency domain offset information.

9. The method according to any one of claims 1-5, wherein the first indication information is further configured to instruct the terminal to determine the frequency domain resource of the target PUSCH according to the first frequency domain offset information.

10. The method according to any one of claims 1 to 5, further comprising:
if the terminal receives the first indication information, determining the frequency domain resource of the target PUSCH according to the first frequency domain offset information;
or,
if the terminal receives the first indication information and the scheduled target PUSCH is configured in a cell-level downlink symbol or a flexible symbol, determining the frequency domain resource of the target PUSCH according to the first frequency domain offset information.

11. A frequency domain resource indication method, performed by a network device, comprising:
determining frequency domain resource for terminal to transmit a target physical uplink shared channel (PUSCH);
determining first indication information according to the frequency domain resource of the target PUSCH; wherein the first indication information is configured to indicate first frequency domain offset information between an uplink sub-band and a first bandwidth part (BWP); and
sending the first indication information to the terminal.

12. The method according to claim 11, further comprising:
sending frequency domain resource allocation (FDRA) information to the terminal; wherein a quantity of virtual resource block (VRB) addressed by the FDRA information is: a quantity of RBs comprised in an initial BWP, or a quantity of RBs comprised in an uplink sub-band;
the FDRA information and the first indication information are used by the terminal to determine the frequency domain resource of the target PUSCH.

13. The method according to claim 12, wherein
a physical resource block (PRB) corresponding to the frequency domain resource of the target PUSCH is determined by information of the VRB and the first frequency domain offset information;
wherein the first BWP is an activated BWP.

14. The method according to claim 12, wherein
the PRB corresponding to the frequency domain resource of the target PUSCH is determined by the VRB information, the first frequency domain offset information, and the second frequency domain offset information between the initial BWP and the activated BWP;
wherein the first BWP is an initial BWP.

15. The method according to claim 12, wherein
the PRB corresponding to the frequency domain resource of the target PUSCH is determined by the information of the VRB and the first frequency domain offset information;
wherein the first BWP is an initial BWP, and the activated BWP is the same as the uplink sub-band.

16. The method according to any one of claims 11 to 15, further comprising:
according to a predefined first rule, determining that the frequency domain resource of the target PUSCH is indicated by the first frequency domain offset information; wherein the first rule comprises at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

17. The method according to any one of claims 11 to 15, further comprising:
by sending the first indication information, indirectly instructing the terminal to determine the frequency domain resource of the target PUSCH according to the first frequency domain offset information;
or,
by sending the first indication information and the configured target PUSCH in a downlink symbol or a flexible symbol at the cell level, the terminal is indirectly instructed to determine the frequency domain resource of the target PUSCH according to the first frequency domain offset information.

18. The method according to any one of claims 11 to 15, further comprising:
sending second indication information to the terminal, wherein the second indication information is configured to instruct the terminal to determine the frequency domain resource of the target PUSCH according to the first frequency domain offset information.

19. The method according to any one of claims 11-15, wherein the first indication information is further configured to instruct the terminal to determine the frequency domain resource of the target PUSCH according to the first frequency domain offset information.

20. A terminal, comprising a memory, a transceiver, and a processor:
the memory is configured to store a computer program; the transceiver is configured to send and receive data under a control of the processor; and the processor is configured to read the computer program in the memory to perform:
receiving first indication information, wherein the first indication information is configured to indicate first frequency domain offset information between an uplink sub-band and a first bandwidth part (BWP);
determining a frequency domain resource of a target PUSCH according to the first frequency domain offset information.

21. The terminal according to claim 20, wherein the processor is further configured to read the computer program in the memory to perform:
determining the frequency domain resource of the target PUSCH according to the first frequency domain offset information and frequency domain resource allocation (FDRA) information;
wherein a quantity of virtual resource block (VRB) addressed by the FDRA information is: a quantity of RBs comprised in an initial BWP, or a quantity of RBs comprised in an uplink sub-band.

22. The terminal according to claim 21, wherein the first BWP is an activation BWP;
the processor is configured to read the computer program in the memory to perform:
according to a number of the VRB addressed by the FDRA information and the first frequency domain offset information, mapping the VRB to a physical resource block (PRB) to obtain a frequency domain resource of the target PUSCH.

23. The terminal according to claim 21, wherein the first BWP is an initial BWP;
the processor is configured to read the computer program in the memory to perform:
according to the number of the VRB addressed by the FDRA information, the first frequency domain offset information, and the second frequency domain offset information between the initial BWP and the activated BWP, mapping the VRB to a PRB to obtain the frequency domain resource of the target PUSCH.

24. The terminal according to claim 21, wherein the first BWP is an initial BWP, and the activated BWP is the same as the uplink sub-band;
the processor is configured to read the computer program in the memory to perform:
according to the number of the VRB addressed by the FDRA information and the first frequency domain offset information, mapping the VRB to a PRB to obtain the frequency domain resource of the target PUSCH.

25. The terminal according to any one of claims 20 to 24, wherein the processor is further configured to read a computer program in the memory to perform:
according to relevant parameters of a scheduled target PUSCH, determining a frequency domain resource of the target PUSCH according to the first frequency domain offset information.

26. The terminal according to claim 25, wherein the processor is further configured to read the computer program in the memory to perform:
if the scheduled target PUSCH is within a time domain range corresponding to the uplink sub-band, determining the frequency domain resource of the target PUSCH according to the first frequency domain offset information;
or,
if the scheduled target PUSCH is configured in a cell-level downlink symbol or a flexible symbol, determining the frequency domain resource of the target PUSCH according to the first frequency domain offset information;
or,
according to the physical random access channel (PRACH) resource corresponding to the target PUSCH, determining the frequency domain resource of the target PUSCH according to the first frequency domain offset information; wherein there exists a mapping relationship the PRACH resource and the resource determination method of the target PUSCH.

27. The terminal according to any one of claims 20 to 24, wherein the processor is further configured to read a computer program in the memory to perform:
receiving second indication information sent by a network device; wherein the second indication information is for the terminal to determine the frequency domain resource of the target PUSCH according to the first frequency domain offset information;
according to the second indication information, determining the frequency domain resource of the target PUSCH according to the first frequency domain offset information.

28. The terminal according to any one of claims 20-24, wherein the first indication information is further configured to instruct the terminal to determine the frequency domain resource of the target PUSCH according to the first frequency domain offset information.

29. The terminal according to any one of claims 20 to 24, wherein the processor is further configured to read a computer program in the memory to perform:
if the terminal receives the first indication information, determining the frequency domain resource of the target PUSCH according to the first frequency domain offset information;
or,
if the terminal receives the first indication information and the scheduled target PUSCH is configured in a cell-level downlink symbol or a flexible symbol, determining the frequency domain resource of the target PUSCH according to the first frequency domain offset information.

30. A frequency domain resource determination apparatus, comprising:
a receiving unit, configured to receive first indication information, wherein the first indication information is configured to indicate first frequency domain offset information between an uplink sub-band and a first bandwidth part (BWP);
a first determining unit, configured to determine a frequency domain resource of a target PUSCH according to the first frequency domain offset information.

31. The frequency domain resource determination apparatus according to claim 30, wherein the first determination unit comprises:
a first determining subunit, configured to determine the frequency domain resource of the target PUSCH according to the first frequency domain offset information and frequency domain resource allocation (FDRA) information;
wherein a quantity of virtual resource block (VRB) addressed by the FDRA information is: a quantity of RBs comprised in an initial BWP, or a quantity of RBs comprised in an uplink sub-band.

32. The frequency domain resource determination apparatus according to claim 31, wherein the first BWP is an activated BWP;
the first determining subunit is further configured to:
according to a number of the VRB addressed by the FDRA information and the first frequency domain offset information, map the VRB to a physical resource block (PRB) to obtain a frequency domain resource of the target PUSCH.

33. The frequency domain resource determination apparatus according to claim 31, wherein the first BWP is an initial BWP;
the first determining subunit is further configured to:
according to the number of the VRB addressed by the FDRA information, the first frequency domain offset information, and the second frequency domain offset information between the initial BWP and the activated BWP, map the VRB to a PRB to obtain the frequency domain resource of the target PUSCH.

34. The frequency domain resource determination apparatus according to claim 30, wherein the first BWP is an initial BWP, and the activated BWP is the same as the uplink sub-band;
the first determining subunit is further configured to:
according to the number of the VRB addressed by the FDRA information and the first frequency domain offset information, map the VRB to a PRB to obtain the frequency domain resource of the target PUSCH.

35. The frequency domain resource determination apparatus according to any one of claims 30 to 34, further comprises:
a second determining unit, configured to determine, according to relevant parameters of a scheduled target PUSCH, a frequency domain resource of the target PUSCH according to the first frequency domain offset information.

36. The method according to claim 35, wherein the second determining unit comprises:
a second determining subunit, configured to:
if the scheduled target PUSCH is within a time domain range corresponding to the uplink sub-band, determine the frequency domain resource of the target PUSCH according to the first frequency domain offset information;
or,
if the scheduled target PUSCH is configured in a cell-level downlink symbol or a flexible symbol, determine the frequency domain resource of the target PUSCH according to the first frequency domain offset information;
or,
according to the physical random access channel (PRACH) resource corresponding to the target PUSCH, determine the frequency domain resource of the target PUSCH according to the first frequency domain offset information; wherein there exists a mapping relationship the PRACH resource and the resource determination method of the target PUSCH.

37. The frequency domain resource determination apparatus according to any one of claims 30 to 34, further comprises:
a second receiving unit, configured to receive second indication information sent by a network device; wherein the second indication information is for the terminal to determine the frequency domain resource of the target PUSCH according to the first frequency domain offset information;
a third determining unit, configured to determine, according to the second indication information, the frequency domain resource of the target PUSCH according to the first frequency domain offset information.

38. The frequency domain resource determination apparatus according to any one of claims 30-34, wherein the first indication information is further configured to instruct the terminal to determine the frequency domain resource of the target PUSCH according to the first frequency domain offset information.

39. The frequency domain resource determination apparatus according to any one of claims 30 to 34, further comprising:
a fourth determining unit, configured to:
if the terminal receives the first indication information, determining the frequency domain resource of the target PUSCH according to the first frequency domain offset information;
or,
if the terminal receives the first indication information and the scheduled target PUSCH is configured in a cell-level downlink symbol or a flexible symbol, determining the frequency domain resource of the target PUSCH according to the first frequency domain offset information.

40. A network device, comprising a memory, a transceiver, and a processor:
the memory is configured to store a computer program; the transceiver is configured to send and receive data under a control of the processor; and the processor is configured to read the computer program in the memory to perform:
determining frequency domain resource for terminal to transmit a target physical uplink shared channel (PUSCH);
determining first indication information according to the frequency domain resource of the target PUSCH; wherein the first indication information is configured to indicate first frequency domain offset information between an uplink sub-band and a first bandwidth part (BWP); and
sending the first indication information to the terminal.

41. The network device according to claim 40, wherein the processor is further configured to read the computer program in the memory to perform:
sending frequency domain resource allocation (FDRA) information to the terminal; wherein a quantity of virtual resource block (VRB) addressed by the FDRA information is: a quantity of RBs comprised in an initial BWP, or a quantity of RBs comprised in an uplink sub-band;
the FDRA information and the first indication information are used by the terminal to determine the frequency domain resource of the target PUSCH.

42. The network device according to claim 41, wherein
a physical resource block (PRB) corresponding to the frequency domain resource of the target PUSCH is determined by information of the VRB and the first frequency domain offset information;
wherein the first BWP is an activated BWP

43. The network device according to claim 41, wherein
the PRB corresponding to the frequency domain resource of the target PUSCH is determined by the VRB information, the first frequency domain offset information, and the second frequency domain offset information between the initial BWP and the activated BWP;
wherein the first BWP is an initial BWP.

44. The network device according to claim 41, wherein
the PRB corresponding to the frequency domain resource of the target PUSCH is determined by the information of the VRB and the first frequency domain offset information;
wherein the first BWP is an initial BWP, and the activated BWP is the same as the uplink sub-band.

45. The network device according to any one of claims 40 to 44, wherein the processor is further configured to read a computer program in the memory to perform:
according to a predefined first rule, determining that the frequency domain resource of the target PUSCH is indicated by the first frequency domain offset information; wherein the first rule comprises at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

46. The network device according to any one of claims 40 to 44, wherein the processor is further configured to read a computer program in the memory to perform:
by sending the first indication information, indirectly instructing the terminal to determine the frequency domain resource of the target PUSCH according to the first frequency domain offset information;
or,
by sending the first indication information and the configured target PUSCH in a downlink symbol or a flexible symbol at the cell level, the terminal is indirectly instructed to determine the frequency domain resource of the target PUSCH according to the first frequency domain offset information.

47. The network device according to any one of claims 40 to 44, wherein the processor is further configured to read a computer program in the memory to perform:
sending second indication information to the terminal, wherein the second indication information is configured to instruct the terminal to determine the frequency domain resource of the target PUSCH according to the first frequency domain offset information.

48. The network device according to any one of claims 40-44, wherein the first indication information is further configured to instruct the terminal to determine the frequency domain resource of the target PUSCH according to the first frequency domain offset information.

49. A frequency domain resource indication apparatus, comprising:
a first determining unit, configured to determine frequency domain resource for terminal to transmit a target physical uplink shared channel (PUSCH);
a second determining unit, configured to determine first indication information according to the frequency domain resource of the target PUSCH; wherein the first indication information is configured to indicate first frequency domain offset information between an uplink sub-band and a first bandwidth part (BWP); and
a first sending unit, configured to send the first indication information to the terminal.

50. The frequency domain resource indication apparatus according to claim 49, wherein the device further comprises:
a second sending unit is configured to send frequency domain resource allocation (FDRA) information to the terminal; wherein a quantity of virtual resource block (VRB) addressed by the FDRA information is: a quantity of RBs comprised in an initial BWP, or a quantity of RBs comprised in an uplink sub-band;
the FDRA information and the first indication information are used by the terminal to determine the frequency domain resource of the target PUSCH.

51. The frequency domain resource indication apparatus according to claim 50, wherein
a physical resource block (PRB) corresponding to the frequency domain resource of the target PUSCH is determined by information of the VRB and the first frequency domain offset information;
wherein the first BWP is an activated BWP.

52. The frequency domain resource indication apparatus according to claim 50, wherein
the PRB corresponding to the frequency domain resource of the target PUSCH is determined by the VRB information, the first frequency domain offset information, and the second frequency domain offset information between the initial BWP and the activated BWP;
wherein the first BWP is an initial BWP..

53. The frequency domain resource indication apparatus according to claim 50, wherein
the PRB corresponding to the frequency domain resource of the target PUSCH is determined by the information of the VRB and the first frequency domain offset information;
wherein the first BWP is an initial BWP, and the activated BWP is the same as the uplink sub-band.

54. The frequency domain resource indication apparatus according to claims 49 to 53, wherein the device further comprises:
a third determining unit, configured to determine, according to a predefined first rule, that the frequency domain resource of the target PUSCH is indicated by the first frequency domain offset information; wherein the first rule comprises at least one of the following:
the target PUSCH is configured within a time domain range corresponding to the uplink sub-band;
the target PUSCH is configured in a cell-level downlink symbol or a flexible symbol;
the physical random access channel (PRACH) resource received by the network device, and a mapping relationship between the PRACH resource and the resource indication method of the target PUSCH.

55. The frequency domain resource indication apparatus according to claims 49-53, wherein the device further comprises:
a processing unit, configured to:
by sending the first indication information, indirectly instruct the terminal to determine the frequency domain resource of the target PUSCH according to the first frequency domain offset information;
or,
by sending the first indication information and the configured target PUSCH in a downlink symbol or a flexible symbol at the cell level, indirectly instructing the terminal to determine the frequency domain resource of the target PUSCH according to the first frequency domain offset information.

56. The frequency domain resource indication apparatus according to claims 49-53, wherein the device further comprises:
a third sending unit is configured to send second indication information to the terminal, wherein the second indication information is configured to instruct the terminal to determine the frequency domain resource of the target PUSCH according to the first frequency domain offset information.

57. The frequency domain resource indication apparatus according to claims 49-53, wherein the first indication information is further configured to instruct the terminal to determine the frequency domain resource of the target PUSCH according to the first frequency domain offset information.

58. A processor-readable storage medium, storing a computer program, wherein the computer program is configured to cause the processor to execute the method according to any one of claims 1 to 10, or the computer program is configured to cause the processor to execute the method according to any one of claims 11 to 19.
